# EUROPÄISCHE PATENTSCHRIFT

(11) **EP 2 624 438 B1**
(45) Veröffentlichungstag und Bekanntmachung des Hinweises auf die Patenterteilung: **22.05.2019**
(21) Anmeldenummer: 13000464.1
(22) Anmeldetag: 31.01.2013
(51) Int. Cl.: H02P 6/00, A01D 46/26

(54) **Verfahren zum Betrieb eines Arbeitsgerätes mit einem Elektromotor und Arbeitsgerät mit einem Elektromotor**
Method for operating an work tool with an electric motor and a work tool with an electric motor
Procédé de fonctionnement d'un appareil de travail avec un moteur électrique et appareil de travail avec un moteur électrique

(30) Priorität: 04.02.2012 DE 102012002270
(43) Veröffentlichungstag der Anmeldung: 07.08.2013
(73) Patentinhaber: Andreas Stihl AG & Co. KG, 71336 Waiblingen (DE)
(72) Erfinder: Oerding, Jochen, D-71640 Ludwigsburg (DE); Wichert, René, D-73568 Durlangen (DE); Renz, Christian, D-88400 Biberach (DE); Liebhard, Gernot, D-71332 Waiblingen (DE)
(74) Vertreter: Wasmuth, Rolf

(56) Entgegenhaltungen:
- EP-A2- 0 283 945
- EP-A2- 1 830 462
- US-A1- 2004 263 101
- US-A1- 2006 290 304

## Beschreibung

Die Erfindung betrifft ein Verfahren zum Betrieb eines Arbeitsgerätes mit einem Elektromotor sowie ein Arbeitsgerät mit einem von einem Elektromotor angetriebenen Werkzeug.

Aus der DE 10 2007 046 111 A1 ist ein tragbares, handgeführtes Arbeitsgerät bekannt, das als Erntegerät ausgebildet ist. Ein Antriebsmotor treibt über einen Kurbeltrieb eine Rüttelstange an, die über einen Haken an einem zu erntenden Ast eingehängt ist. In Abhängigkeit von der Drehzahl des Antriebsmotors bildet sich eine Rüttelschwingung aus, die die zu erntenden Früchte von dem gerüttelten Ast löst. Unterschiedliche Reifegrade der Früchte verlangen ebenso wie unterschiedliche Früchte unterschiedliche Frequenzen der Rüttelschwingungen, weshalb der Benutzer die Antriebsdrehzahl des Erntegerätes je nach den zu erntenden Früchten, deren Reifegrad und der Stärke des zu rüttelnden Astes anpassen muss.

Bei derartigen handgeführten Arbeitsgeräten kann ein Dauerbetrieb mit verminderter Drehzahl vorteilhaft sein. Vorteilhaft wird eine Drehzahl in Abhängigkeit des Reifegrads der zu erntenden Früchte und der Aststärke der zu schüttelnden Äste eingestellt. Auch zur Lärmreduzierung kann ein Betrieb mit verminderter Drehzahl wünschenswert sein. Hierzu muss der Benutzer durch teilweises Niederdrücken des Bedienhebels die gewünschte Drehzahl einstellen, was dann unangenehm und wenig ergonomisch ist, wenn der Benutzer den Bedienhebel für längere Zeit in teilweise gedrückter Stellung halten muss.

Auch bei einer Motorkettensäge mit einem Elektromotor zum Antrieb einer Sägekette, wie sie aus der DE 10 2009 012 181 A1 bekannt ist, kann bei bestimmten Arbeiten, wie z. B. Entasten, eine reduzierte Drehzahl zweckmäßig sein.

Aus der DE 10 2006 062 354 A1 ist eine Leistungskennlinie für einen Elektromotor in einem elektrischen Arbeitsgerät für den Landschafts-, Forst- und Gartenbau bekannt, dessen Leistungskennlinie über der Drehzahl ein Maximum aufweist. Im Betrieb wählt der Benutzer durch Änderung der Betriebsdrehzahl jeweils unterschiedliche Arbeitspunkte auf dieser Kennlinie. Arbeitspunkte, die vor einem Leistungsmaximum der Kennlinie liegen, sind instabile Arbeitspunkte und durch einen Benutzer nur sehr schwer zu halten; Arbeitspunkte jenseits des Maximums der Leistungskennlinie sind stabile Arbeitspunkte, die der Benutzer leicht anfahren und halten kann.

Der Erfindung liegt die Aufgabe zugrunde, ein Verfahren zum Betrieb eines Elektromotors in einem Arbeitsgerät anzugeben, mit dem der Benutzer über einen großen Betriebsbereich des elektrischen Antriebs bei einer beliebigen Drehzahl in einem stabilen Arbeitspunkt arbeiten kann. Ferner soll ein Arbeitsgerät mit einem von einem Elektromotor angetriebenen Werkzeug zur Ausführung des Verfahrens angegeben werden.

Die Aufgabe wird mit dem Verfahren nach den Merkmalen des Anspruchs 1 gelöst; Anspruch 8 gibt ein Arbeitsgerät mit einem von einem Elektromotor angetriebenen Werkzeug zur Ausführung des Verfahrens an.

Die Leistungskennlinie eines über eine Steuereinheit an eine Spannungsquelle angeschlossenen Elektromotors als Antriebsmotor in einem Arbeitsgerät kann elektronisch modifiziert sein und weist zwischen einer unteren und einer oberen Drehzahl ein ausgeprägtes Maximum auf. An das Maximum kann mit steigender Drehzahl ein Arbeitsplateau anschließen, über dessen Ausdehnung sich die elektrische Leistung des Elektromotors nur wenig verändert, zweckmäßig etwa gleich bleibt. Die Lage des Arbeitsplateaus über der Drehzahl des Elektromotors ist nach der Erfindung verschiebbar, so dass das Arbeitsplateau immer in einem gewählten Arbeitsdrehzahlbereich des Arbeitsgerätes liegt.

Anstelle eines Abbruchs oder Abschneidens der Kennlinie eines Elektromotors erfolgt die Verschiebung der Lage des Arbeitsplateaus vorteilhaft derart, dass die Leistungscharakteristik der Leistungskennlinie im Wesentlichen unverändert bleibt. Mit Leistungscharakteristik wird ein Verlauf bzw. die Form der Leistungskennlinie über der Drehzahl beschrieben, bei der die Leistung mit vom Start anwachsender Drehzahl bis auf ein Leistungsmaximum ansteigt, nach dem Leistungsmaximum ein Arbeitsplateau mit nur wenig veränderter Leistung über der Drehzahl zeigt, um bei weiter steigender Drehzahl am Ende des Arbeitsplateaus steil abzufallen.

Die Verschiebung der Lage des Arbeitsplateaus über der Drehzahl erfolgt durch eine Einstellung eines gewünschten Arbeitsdrehzahlbereichs, insbesondere einer gewünschten Arbeitsdrehzahl. Dabei wird zweckmäßig die Leistungskennlinie auf den vorgewählten Arbeitsdrehzahlbereich oder auf die vorgewählte Arbeitsdrehzahl des elektrischen Arbeitsgerätes skaliert.

Vorteilhaft wird die Leistungskennlinie entweder in Achsrichtung der Drehzahl oder in Achsrichtung der Drehzahl und in Achsrichtung der Leistung skaliert. Dabei ist es vorteilhaft, die Skalierung so auszuführen, dass die Leistungskennlinie unterhalb einer thermischen Leistungsgrenze des Elektromotors liegt. Zweckmäßig wird die Leistungskennlinie im gleichen Verhältnis der Achsen skaliert.

Die zweckmäßig elektronische Gestaltung der Leistungskennlinie des Elektromotors erfolgt derart, dass das Arbeitsplateau an ein Maximum der aufgenommenen elektrischen Leistung anschließt, wobei die im Bereich des Arbeitsplateaus aufgenommene elektrische Leistung über der Drehzahl nur geringfügig variiert oder in etwa gleich ist. Das Arbeitsplateau weist bei steigender Drehzahl ein Ende auf, ab dem die elektrische Leistung mit steigender Drehzahl steil abfällt. Durch diese Gestaltung ist eine Leistungscharakteristik des Elektromotors erzielt, die bei einer Skalierung auf eine gewünschte Arbeitsdrehzahl zwar in absoluten Werten geändert wird, in der Form der Kennlinie, die die Leistungscharakteristik wiedergibt, aber im Wesentlichen unverändert ist.

Bei der Skalierung der Leistungskennlinie, gleich in welcher Form, wird eine obere thermische Leistungsgrenze der aufgenommenen elektrischen Leistung des Elektromotors dauerhaft nicht überschritten.

Ein Arbeitsgerät zur Ausführung des Verfahrens ist im Anspruch 8 angegeben. Als Antriebsmotor ist ein Elektromotor vorgesehen, der ein Werkzeug antreibt. Der Elektromotor ist über eine Steuereinheit an eine Energiequelle angeschlossen, wobei - zweckmäßig durch die Steuereinheit - die Leistungskennlinie des Elektromotors mit einem ausgeprägten Maximum und einem in einem Arbeitsdrehzahlbereich des Arbeitsgerätes liegenden Arbeitsplateau ausgebildet ist. Die Steuereinheit ist mit einer elektrischen Einstellvorrichtung zur Verstellung der Lage des Arbeitsplateaus über der Drehzahl des Elektromotors durch den Benutzer verbunden. Auf ein Stellsignal der Einstellvorrichtung wird die Steuereinheit eine derartige Veränderung der Leistungskennlinie des Elektromotors vornehmen, dass jede vom Benutzer vorgewählte Arbeitsdrehzahl in einem stabilen Arbeitspunkt liegt. Der Benutzer ändert mit der Einstellvorrichtung somit nicht nur den Arbeitsdrehzahlbereich des antreibenden Elektromotors, sondern über die Steuereinheit die Lage der Leistungskennlinie in einer derartigen Weise, dass bei der von ihm gewählten Arbeitsdrehzahl ein stabiler Arbeitspunkt gegeben ist. Dies ist in einfacher Weise über die Steuereinheit selbst möglich, da die Leistungskennlinie des - insbesondere als EC-Motor ausgebildeten - Elektromotors eine elektronisch gestaltete Leistungskennlinie ist.

Vorteilhaft kann der Benutzer während des Betriebs des Elektromotors, also während des Einsatzes des Arbeitsgerätes, den Drehzahlbereich des Elektromotors derart ändern, bis er eine für den Arbeitsvorgang zweckmäßige Drehzahl gefunden hat. Da die Steuereinheit die Leistungskennlinie gleichzeitig derart verschiebt, skaliert oder verändert, dass die gewünschte Arbeitsdrehzahl bei weiter steigender Drehzahl hinter dem Leistungsmaximum auf dem Arbeitsplateau liegt, ist zu der vom Benutzer gewählten Drehzahl auch ein stabiler Arbeitspunkt gegeben. Dieser Arbeitspunkt kann durch den Benutzer leicht angefahren und gehalten werden.

Zweckmäßig entspricht jede von einem Benutzer über die Einstellvorrichtung beliebig gewählte Arbeitsdrehzahl einem Arbeitspunkt, der jeweils auf einem verschobenen Arbeitsplateau der elektronisch angepassten Leistungskennlinie liegt.

Die Einstellvorrichtung zur Änderung der Drehzahl und damit zur Veränderung der Leistungskennlinie ist über ein am Gehäuse angeordnetes Verstellglied zu betätigen, welches vorteilhaft im Griffbereich des Arbeitsgerätes liegt und so vom Benutzer - auch im Betrieb des Arbeitsgerätes - leicht erreichbar ist. Als Verstellglied kann ein Potentiometer, ein Taster oder dgl. zweckmäßig sein. Vorteilhaft wird eine vom Benutzer gewünschte Drehzahl durch Betätigung eines Drehzahlstellelementes angefahren und dann die angefahrene Drehzahl durch Drücken einer Taste, z. B. einer OK-Taste, von der Elektronik übernommen, die entsprechend die Kennlinie mit dem Arbeitsplateau verändert. Nach Drücken einer Löschtaste wird die auf die angefahrene Drehzahl vorgenommene Einstellung zurückgesetzt.

Der antreibende Elektromotor ist zweckmäßig ein elektronisch kommutierter Elektromotor, wobei die Steuereinheit die Kommutierung erzeugt, wodurch das antreibende Drehfeld des Elektromotors erzeugt ist. Durch Veränderung des antreibenden Drehfelds über die Steuereinheit ist in einfacher Weise die Leistungskennlinie des Elektromotors zu verändern. Das antreibende Drehfeld kann z. B. in der Spannung variiert werden.

Weitere Merkmale der Erfindung ergeben sich aus den weiteren Ansprüchen, der Beschreibung und der Zeichnung, in der nachfolgend ein Ausführungsbeispiel der Erfindung schematisch dargestellt ist. Es zeigen:
- Fig. 1: eine schematische Ansicht einer Motorkettensäge als Beispiel eines Arbeitsgerätes mit einem Akkupack als Energiequelle,
- Fig. 2: eine schematische Ansicht eines Erntegerät zum Schütteln von Ästen als weiteres Beispiel eines mit einem Akkupack betriebenen Arbeitsgerätes,
- Fig. 3: eine schematische Schaltung eines an eine Spannungsquelle angeschlossenen Elektromotors als Antriebsmotor in einem Arbeitsgerät,
- Fig. 4: ein Diagramm der Leistungskennlinie des Elektromotors nach Fig. 3 über der Drehzahl.

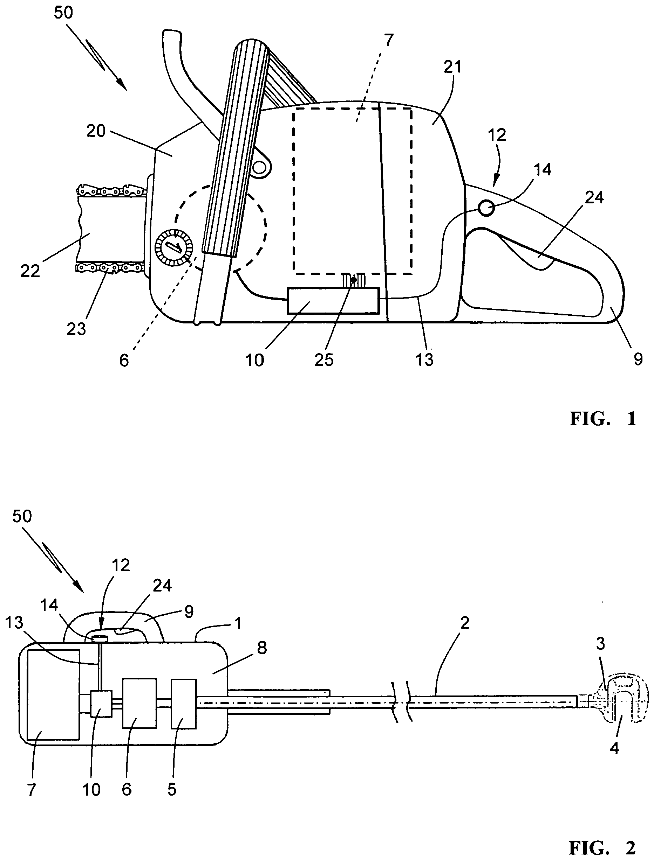

In den Fig. 1 und 2 sind beispielhaft Arbeitsgeräte 50 mit einem Akkupack 7 als Energiequelle dargestellt.

Das in Fig. 1 dargestellte Arbeitsgerät 50 ist eine Motorkettensäge 20 mit einem Gehäuse 21, in dem ein Elektromotor 6 als Antriebsmotor für ein Werkzeug vorgesehen ist. Das Werkzeug ist eine auf einer Führungsschiene 22 umlaufende Sägekette 23. Der Elektromotor 6 wird aus einem Akkupack 7 als Energiequelle gespeist, der in das Gehäuse 21 des Arbeitsgerätes 50 eingeschoben ist. Eine Steuereinheit 10 steuert den Elektromotor 6 an, der vorteilhaft ein elektronisch kommutierter Elektromotor 6 ist, dessen antreibendes Drehfeld durch die Steuereinheit 10 erzeugt ist. Die Steuereinheit 10 ist über Kommunikations- und Energieleitungen 25 mit dem Akkupack 7 verbunden, der im Ausführungsbeispiel vorteilhaft aus z. B. chemisch auf Lithium basierenden Einzelzellen zusammengesetzt ist und bei hoher Leistung eine lange Betriebsdauer des über den Akkupack 7 mit Energie versorgten Arbeitsgerätes 50 sicherstellt; Akkupacks aus NiCd-Zellen, NiMh- Zellen oder Zellen anderer chemischer Struktur können ebenfalls zweckmäßig sein.

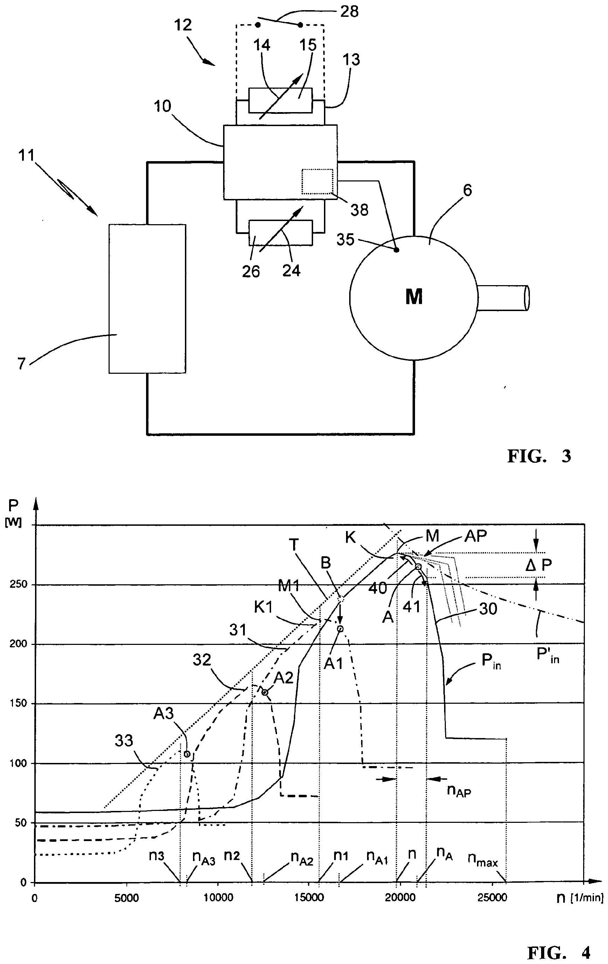

Als Bedienelement 24 für die Betriebsdrehzahl des antreibenden Elektromotors 6 in einem Arbeitsgerät 50 ist ein Schwenkhebel oder ein linear verschiebbares Stellelement vorgesehen, der als Drehzahlsteller z.B. in Form eines verstellbaren Potentiometers 26 (Fig. 3) oder dgl. ausgebildet sein kann.

Das in Fig. 2 dargestellte Arbeitsgerät 50 ist ein Erntegerät 1, welches zum Schütteln von Früchte tragenden Ästen, Zweigen und dgl. vorgesehen ist. Ein derartiger Rüttler besteht im Wesentlichen aus einer Rüttelstange 2, die an ihrem einen Ende einen Haken 3 mit einer Hakenöffnung 4 zum Einfädeln eines Astes aufweist und an ihrem anderen Ende mit einem Getriebe 5 zum Erzeugen einer Rüttelschwingung verbunden ist. Das Getriebe 5 kann als Exzentergetriebe, Kurbeltrieb oder dgl. ausgebildet sein.

Am Getriebeeingang ist ein Elektromotor 6 angeflanscht, der über eine Steuereinheit 10 an eine Spannungsquelle 11 (Fig. 3) angeschlossen ist. Im gezeigten Ausführungsbeispiel ist die Spannungsquelle ein Akkupack 7; alternativ kann ein Netzanschluss vorgesehen sein.

Das Getriebe 5, der Elektromotor 6, die Steuereinheit 10 und der Akku 7 sind in einem Gehäuse 8 angeordnet, welches einen Griff 9 zum Tragen des Erntegerätes durch einen Benutzer aufweist. Im Griff ist als Bedienelement 24 für die Betriebsdrehzahl des antreibenden Elektromotors 6 ein Schwenkhebel vorgesehen, der als Drehzahlsteller z. B. in Form eines verstellbaren Potentiometers 26 (Fig. 3) oder dgl. ausgebildet sein kann.

Die dargestellten Arbeitsgeräte 50 sind beispielhaft angegeben und dienen der Erläuterung der Erfindung; das Arbeitsgerät 50 kann auch als Trennschleifer, Heckenschere, Blasgerät oder dgl. Arbeitsgerät ausgebildet sein.

Wie Fig. 3 zeigt, ist der Elektromotor 6 an die Spannungsquelle 11 angeschlossen, die von einem Akkupack 7 gebildet ist und eine Energiequelle zum Betrieb des Arbeitsgerätes 50 bildet. Der Elektromotor 6, der vorteilhaft ein elektronisch kommutierter Elektromotor ist, ist von der Steuereinheit 10 angesteuert, die dem Elektromotor 6 eine Leistungskennlinie über der Drehzahl n aufprägt.

Ein Elektromotor 6 hat - wie in Fig. 4 gezeigt - eine physikalisch vorgegebene allgemeine Leistungskennlinie Pᵢₙ, die im Wesentlichen bei einer Nenndrehzahl von z. B. 30.000 1/min eine vernachlässigbare kleine Leistung P aufnimmt und bei einer Drehzahl n gegen Null eine sehr hohe Leistungsaufnahme hat. Diese Leistungskennlinie P'ᵢₙ wird mittels der Steuereinheit 10 derart geformt, dass eine Kennlinie 30 mit einem ausgeprägten Maximum M ausgebildet ist, das z. B. im Bereich einer Betriebsdrehzahl von etwa 20.000 1/min vorliegt. Das Maximum M ist elektronisch derart gestaltet, dass sich eine ausgeprägte Kuppe K ergibt, wobei ein Arbeitspunkt A des Elektromotors 6 allgemein jenseits des Maximums M liegen sollte. Dadurch ist erreicht, dass sich im Betrieb des Arbeitsgerätes 50 bei steigender Last und dadurch sinkender Drehzahl n der Arbeitspunkt A in Richtung des Pfeils 40 zum Maximum M verlagert, während sich bei sinkender Last und dadurch ansteigender Drehzahl n der Arbeitspunkt A in Richtung des Pfeils 41 vom Maximum M wegbewegt. Der bei steigender Drehzahl n sich an das Maximum M anschließende Kurvenabschnitt kann auch als Arbeitsplateau AP bezeichnet werden, welches sich über eine Drehzahlbreite n_{AP} erstreckt. Die Gestaltung des Arbeitsplateaus AP ist dabei so vorgesehen, dass sich über die Drehzahlbreite n_{AP} die Leistung P in einem nur schmalen Bereich ΔP ändert oder im Wesentlichen gleich ist.

Im Betrieb z. B. einer Motorkettensäge 20 gemäß Fig. 1 wird der Benutzer die Führungsschiene 22 mit entsprechender Kraft in den Schnitt drücken, damit die Sägekette schneidet. Drückt der Benutzer zu stark, sinkt die Drehzahl. Unterhalb der Drehzahl des Leistungsmaximums fällt die Leistung ab (Überdrücken); drückt der Benutzer zu wenig, ist die Belastung des Elektromotors zu gering, weshalb dessen Drehzahl stark ansteigt, was aufgrund der gestalteten Kennlinie nach dem Ende des Arbeitsplateaus zu einem starken Leistungseinbruch führt.

Durch diese Gestaltung der Kennlinie 30 ist dem Benutzer ein verbessertes Führen des Arbeitsgerätes 50 möglich, da er den auf dem Arbeitsplateau AP liegenden Arbeitspunkt A leicht anfahren und halten kann. Wird die Last z. B. am Haken 3 (Erntegerät nach Fig. 2) zu groß, sinkt die Drehzahl n und die Leistung P steigt bis zum Leistungsmaximum; wird die Last zu klein, steigt die Drehzahl n und die Leistung P geht zurück. Diese Reaktionen spürt der Benutzer im Betrieb, so dass er das Führen des Arbeitsgerätes 50 entsprechend anpassen kann.

Das ausgebildete Arbeitsplateau AP kann gemäß Fig. 4 in der Form unterschiedlich gestaltet sein. Wie in Fig. 4 oben rechts angedeutet, kann das Arbeitsplateau AP über seine Drehzahlbreite n_{AP} geradlinig, geknickt oder in anderer Weise geeignet gestaltet sein. Ebenso kann die Steigung des Arbeitsplateaus AP über der Drehzahlbreite n_{AP} gleich sein, sich sprunghaft oder auch kontinuierlich ändern. Die Gesamtsteigung ist dabei so gewählt, dass sich über die Drehzahlbreite n_{AP} die Leistung P in einem nur schmalen Bereich ΔP ändert oder im Wesentlichen gleich ist.

Das als Erntegerät 1 ausgebildete Arbeitsgerät 50 gemäß dem Ausführungsbeispiel in Fig. 2 wird bei unterschiedlichen Früchten mit unterschiedlichem Reifegrad angewendet. Abhängig von der zu erntenden Frucht, deren Reifegrad und der Stärke des zu rüttelnden Astes sind unterschiedliche Rüttelschwingungen (Rüttelfrequenzen) zweckmäßig, weshalb der Benutzer die Arbeitsdrehzahl des Elektromotors 6 entsprechend einstellen wird.

Hierzu ist gemäß der Erfindung am Arbeitsgerät 50 eine Einstellvorrichtung 12 vorgesehen, die im Ausführungsbeispiel als elektrische Einstellvorrichtung ausgebildet ist und über Leitungen 13 mit der Steuereinheit 10 verbunden ist. Die Einstellvorrichtung 12 kann der Steuereinheit 10 einen Stellwert vorgeben, nach der die Steuereinheit 10 die Leistungskennlinie 30 derart verändert, dass sich die Lage des Leistungsmaximums M über der Drehzahl n und insbesondere die Lage des Arbeitsplateaus über der Drehzahl n ändert.

Die Einstellvorrichtung 12 kann ein Verstellglied 14 sein (Fig. 2), z. B. ein Drehknopf oder ein Schieberegler, der zweckmäßig auf der Außenseite des Gehäuses 8 liegt und z. B. als Potentiometer 15 ausgebildet ist, wie in Fig. 3 angedeutet. Vorteilhaft liegt das Verstellglied 14 im Nahbereich eines Griffes 9 des Arbeitsgerätes 50, so dass der Benutzer die elektrische Einstellvorrichtung 12 während des Betriebs des Elektromotors 6 mit der den Griff haltenden Hand betätigen kann.

Durch Verstellen des Verstellglieds 14 der Einstellvorrichtung 12 wird der Steuereinheit 10 ein geänderter Stellwert vorgegeben, nach der diese z. B. die Kennlinie 30 in dem Koordinatensystem aus Drehzahl n und Leistung P (Fig. 4) verändert, z. B. in eine Kennlinie 31 transformiert, die gegenüber der ursprünglichen, elektronisch geformten Leistungskennlinie 30 sowohl in Richtung der Achse der Drehzahl n als auch in Richtung der Achse der Leistung P verändert ist, vorteilhaft verschoben, skaliert oder sonst wie geändert ist. Es kann zweckmäßig sein, die Kennlinie 30 nur in Richtung der Achse der Drehzahl n zu skalieren oder in Richtung der Achse der Drehzahl n und in Richtung der Achse der Leistung P unterschiedlich stark zu verändern bzw. zu skalieren, wobei vorteilhaft jeweils eine gleiche, durch die Gestalt der Kennlinie gegebene Leistungscharakteristik erhalten bleibt. Jede Kennlinie 30, 31, 32, 33 zeigt ein ausgeprägtes Leistungsmaximum M über der Drehzahl n, wobei sich bei steigender Drehzahl n an das Leistungsmaximum das Arbeitsplateau AP mit einem Arbeitspunkt A anschließt. Liegt bei einer Ausgangskennlinie das Maximum M der Drehzahl n bei etwa 20.000 1/min, wird bei einer veränderten bzw. skalierten Kennlinie 31 das Maximum der Drehzahl nun - vgl. Fig. 4 - im Bereich von etwa 15.000 l/min liegen, entsprechend dem vom Benutzer vorgegebenen Stellwert. Die ausgebildete Kuppe K1 der Kennlinie 31 entspricht in ihrer Gestalt - bei veränderten absoluten Werten - etwa der Kuppe K der Ausgangskennlinie 30. Auch bei der skalierten Kennlinie 31 ist bei steigender Drehzahl nach dem Maximum M1 ein Arbeitsplateau AP ausgebildet, welches in seiner Form dem Arbeitsplateau AP der Ausgangskennlinie 30 entspricht. Dies ermöglicht wieder die Lage des vom Benutzer gewählten Arbeitspunktes A1 auf dem Arbeitsplateau, wobei der Arbeitspunkt A1 - bei steigender Drehzahl - jenseits des Maximums M1 der Leistung P liegt und vom Benutzer durch Betätigen des Bedienelementes 24 leicht angefahren und gehalten werden kann. Auch dieser Arbeitspunkt A1 zeichnet sich dadurch aus, dass bei steigender Last die Drehzahl nur leicht sinkt und die abgegebene Leistung steigt, während bei fallender Last die Drehzahl ansteigt und die Leistung zurückgeht. Über die Drehzahlbreite des Arbeitsplateaus AP ändert sich die Leistung P nur geringfügig oder bleibt im Wesentlichen gleich.

Die Veränderung der Ausgangskennlinie 30 zur Einstellung eines stabilen Arbeitspunktes wird derart vorgenommen, dass eine maximale Leistung bei thermisch gesundem Elektromotor erzielt ist. Daher ist vorgesehen, dass alle Kennlinien 30 bis 33 unterhalb einer thermisch zulässigen Leistungskennlinie T liegen. Es kann zweckmäßig sein, ein kurzfristiges Überschreiten der thermischen Leistungskennlinie T zuzulassen.

Würde der Benutzer einen entsprechenden Betriebspunkt B auf der unveränderten Ausgangskennlinie 30 anfahren, so würde dieser Betriebspunkt B nur sehr schwer zu halten sein. Bei steigender Last und fallender Drehzahl n fällt entsprechend dem Kennlinienabschnitt vor dem Leistungsmaximum M auch die Leistung P des Elektromotors, wodurch der Betriebspunkt B auf der Kennlinie 30 weiter nach unten abrutscht, d. h., auch die Leistung P weiter zurückgeht, so dass ein signifikanter Drehzahleinbruch unvermeidlich ist. Geht die abgenommene Last hingegen zurück, steigt die Drehzahl n und - aufgrund der Lage des Betriebspunktes B vor dem Maximum der Leistung P - auch die Leistungsaufnahme des Elektromotors 6. Durch die Skalierung der Kennlinie 30 zur Kennlinie 31 ist erreicht, dass bei gleicher Drehzahl im Betriebspunkt B nun ein stabiler Arbeitspunkt A1 ausgebildet ist, der auf einem bei steigender Drehzahl sich kaum veränderndem Kurvenabschnitt des Arbeitsplateaus AP liegt und erst an dessem Ende in einen signifikant abfallenden Kurvenabschnitt übergeht, wodurch der Arbeitspunkt A1 vom Benutzer leicht angefahren und gehalten werden kann.

In entsprechender Weise wird durch Verstellen der Einstellvorrichtung 12 und dem dadurch geänderten Stellwert von der Steuereinheit 10 eine Kennlinie 32 oder eine Kennlinie 33 ausgebildet, so dass der Benutzer abhängig vom Typ des Arbeitsgerätes 50 und dessen Einsatzzweck immer einen stabilen Arbeitspunkt A, A1, A2, A3 bei unterschiedlichen Drehzahlen n einstellen und anfahren kann.

In Weiterbildung der Erfindung kann ein Taster 28 (Fig. 3) vorgesehen sein, den der Benutzer als "OK-Taster" dann niederdrückt, wenn er mit dem Bedienelement 24 die gewünschte Arbeitsdrehzahl eingestellt hat. Die der Stellung des Bedienelementes 24 entsprechende Motordrehzahl wird vorteilhaft über einen Drehzahlsensor 35 erfasst und der Steuereinheit 10 mitgeteilt, die dann die Motordrehzahl als gewählte Arbeitsdrehzahl abspeichert und die entsprechende Anpassung der Kennlinie 30 vornimmt. Die abgespeicherte Arbeitsdrehzahl kann z. B. durch nochmaliges Drücken des Tasters 28 gelöscht werden.

In weiterer Ausgestaltung der Erfindung kann eine Elektronik 38 vorgesehen sein, die - zweckmäßig in der Steuereinheit 10 integriert - eine automatische Anpassung der Kennlinie 30 auslöst. Betreibt z. B. der Benutzer das Arbeitsgerät über eine vorgegebene Zeitspanne mit einer weitgehend gleichen Drehzahl, was durch Überwachung des Ausgangssignals des Drehzahlsensors 35 festgestellt werden kann oder durch Nutzung einer bereits in der Steuereinheit 10 vorliegenden Information zur Drehzahl, so veranlasst die Elektronik 38 die Abspeicherung dieser gleichen Drehzahl als gewählte Arbeitsdrehzahl, worauf die Steuereinheit 10 die Anpassung der Kennlinie 30 gemäß der abgespeicherten, gewählten Arbeitsdrehzahl vornimmt.

Die automatische Anpassung der Kennlinie 30 in Abhängigkeit der Dauer einer vom Benutzer gewählten Motordrehzahl kann fortlaufend aktiv sein. Betreibt der Benutzer für eine vorbestimmte Zeitspanne das Arbeitsgerät mit einer anderen Arbeitsdrehzahl, veranlasst die Elektronik 38 wiederum eine Übernahme der aktuellen Motordrehzahl als neue Arbeitsdrehzahl in den Speicher, und die Steuereinheit 10 passt die Kennlinie entsprechend der neuen Arbeitsdrehzahl an.

Die automatische Anpassung der Kennlinie oder die Löschung einer Einstellung der Kennlinie kann zweckmäßig in Abhängigkeit des Signals eines Sensors erfolgen, z. B. eines Drehratensensors, Drucksensors, Temperatursensors, kapazitiven und/oder induktiven Sensors oder dgl..

Alternativ oder zusätzlich kann vorgesehen sein, die abgespeicherte Arbeitsdrehzahl durch Drücken des Tasters 28 zu löschen.

Der Elektromotor 6 ist bevorzugt ein elektronisch kommutierter Elektromotor, dessen antreibendes Drehfeld durch die Steuereinheit 10 derart zu verändern ist, dass sich die in Fig. 4 dargestellten Kennlinien 30, 31, 32, 33 ausbilden. Die Gestaltung der Kennlinie, die auch als dem Elektromotor aufgeprägte Leistungscharakteristik bezeichnet werden kann, kann dadurch erreicht werden, dass z. B. die Spannung des antreibenden Drehfeldes verändert wird, z. B. durch Pulsweitenmodulation der Spannung.

## Patentansprüche

1. Arbeitsgerät mit einem von einem Elektromotor (6) angetriebenen Werkzeug, wobei der Elektromotor (6) über eine Steuereinheit (10) an eine Energiequelle (11) angeschlossen ist,
und mit einer Einstellvorrichtung (12) zur Einstellung der Drehzahl des antreibenden Elektromotors (6),
wobei die Leistungskennlinie (30, 31, 32, 33) des Elektromotors (6) zwischen einer unteren und einer oberen Drehzahl eine Leistungskennlinie mit einem ausgeprägten Maximum (M) aufweist,
sowie mit einem bei steigender Drehzahl (n) sich an das Maximum (M) anschließenden Kurvenabschnitt, der ein Arbeitsplateau (AP) bildet, welches sich über eine Drehzahlbreite (n_{AP}) erstreckt, und die Drehzahlbreite (n_{AP}) einem Arbeitsdrehzahlbereich (AD) des Arbeitsgerätes (50) entspricht,
**dadurch gekennzeichnet, dass** die Steuereinheit (10) mit einer elektrischen Einstellvorrichtung (12) zur elektronischen Modifizierung der Leistungskennlinie versehen ist,
und die Einstellvorrichtung (12) zur Verstellung der Lage des Arbeitsplateaus (AP) über der Drehzahl (n) des Elektromotors (6) durch den Benutzer ausgebildet ist.

2. Arbeitsgerät nach Anspruch 1,
**dadurch gekennzeichnet, dass** die elektrische Einstellvorrichtung (12) während des Betriebs des Elektromotors (6) verstellbar ist.

3. Arbeitsgerät nach Anspruch 1 oder 2,
**dadurch gekennzeichnet, dass** eine von einem Benutzer über die Einstellvorrichtung (12) beliebig gewählte Arbeitsdrehzahl einem Arbeitspunkt (A, A1, A2, A3) entspricht, der jeweils auf einem Arbeitsplateau (AP) der elektronisch der gewählten Arbeitsdrehzahl angepassten Leistungskennlinie (30, 31, 32, 33) liegt.

4. Arbeitsgerät nach einem der Ansprüche 1 bis 3,
**dadurch gekennzeichnet, dass** die Einstellvorrichtung (12) über ein am Gehäuse (8) angeordnetes Verstellglied (14) zu betätigen ist.

5. Arbeitsgerät nach einem der Ansprüche 1 bis 4,
**dadurch gekennzeichnet, dass** der Elektromotor (6) ein elektronisch kommutierter Elektromotor ist, dessen antreibendes Drehfeld durch die Steuereinheit (10) veränderbar ist.

6. Arbeitsgerät nach einem der Ansprüche 1 bis 5,
**dadurch gekennzeichnet, dass** die dem Elektromotor zugeführte Spannung veränderbar ist.

7. Arbeitsgerät nach Anspruch 6,
**dadurch gekennzeichnet, dass** die Spannung durch Pulsweitenmodulation veränderbar ist.

8. Arbeitsgerät nach einem der Ansprüche 1 bis 7,
**dadurch gekennzeichnet, dass** das Arbeitsgerät (50) ein Erntegerät (1) ist.

## Claims

1. A work device having a tool driven by an electric motor (6), the electric motor (6) being connected via a control unit (10) to an energy source (11),
and having an adjusting device (12) for adjusting the speed of the driving electric motor (6),
the power characteristic line (30, 31, 32, 33) of the electric motor (6) having a power characteristic with a marked maximum (M) between a lower and an upper speed,
and having a curved section following the maximum (M), which, as speed (n) increases, forms a working plateau (AP) that extends over a speed range (n_{AP}), and the speed range (n_{AP}) corresponds to a working speed range (AD) of the work device (50),
**characterised in that** the control unit (10) is provided with an electric adjusting device (12) for the electronic modification of the power characteristic,
and the adjusting device (12) is designed to enable the user to adjust the position of the working plateau (AP) via the speed (n) of the electric motor (6).

2. A work device according to claim 1,
**characterised in that** the electric adjusting device (12) can be adjusted during operation of the electric motor (6).

3. A work device according to claim 1 or 2,
**characterised in that** a working speed freely selected by a user by means of the adjusting device (12) corresponds to a working point (A, A1, A2, A3) that lies on a working plateau (AP) of the power characteristic (30, 31, 32, 33) that is adapted electronically to the selected working speed.

4. A work device according to any of claims 1 to 3,
**characterised in that** the adjusting device (12) is actuated by means of an adjusting member (14) arranged on the housing (8).

5. A work device according to any of claims 1 to 4,
**characterised in that** the electric motor (6) is an electronically commutated electric motor with a driving rotary field that can be varied by means of the control unit (10).

6. A work device according to any of claims 1 to 5,
**characterised in that** the voltage supplied to the electric motor can be varied.

7. A work device according to claim 6,
**characterised in that** the voltage can be varied by pulse width modulation.

8. A work device according to any of claims 1 to 7,
**characterised in that** the work device (50) is a harvesting device (1).

## Revendications

1. Appareil de travail avec un outil entraîné par un moteur électrique (6), dans lequel le moteur électrique (6) est relié par une unité de commande (10) à une source d'énergie (11),
et avec un dispositif de réglage (12) pour régler la vitesse de rotation du moteur électrique d'entraînement (6),
dans lequel la courbe caractéristique de puissance (30, 31, 32, 33) du moteur électrique (6) présente entre des vitesses de rotation inférieure et supérieure une courbe caractéristique de puissance avec un maximum marqué (M),
et avec une section de courbe qui fait suite au maximum (M) lors de l'augmentation de la vitesse de rotation (n) et qui forme un plateau de travail (AP) qui s'étend sur une largeur de vitesse de rotation (n_{AP}), et la largeur de vitesse de rotation (n_{AP}) correspond à une plage de vitesse de rotation (AD) de l'appareil de travail (50),
**caractérisé en ce que** l'unité de commande (10) est pourvue d'un dispositif de réglage électrique (12) pour une modification électronique de la courbe caractéristique de puissance,
et le dispositif de réglage (12) est conçu pour le déplacement, par l'utilisateur, de la position du plateau de travail (AP) au-dessus de la vitesse de rotation (n) du moteur électrique (6).

2. Appareil de travail selon la revendication 1,
**caractérisé en ce que** le dispositif de réglage électrique (12) est réglable pendant le fonctionnement du moteur électrique (6).

3. Appareil de travail selon la revendication 1 ou 2,
**caractérisé en ce qu'**une vitesse de rotation de travail choisie de manière quelconque par un utilisateur par l'intermédiaire du dispositif de réglage (12) correspond à un point de travail (A, A1 A2, A3) qui est situé sur un plateau de travail (AP) de la courbe caractéristique de puissance (30, 31, 32, 33) adaptée par voie électronique à la vitesse de rotation de travail choisie.

4. Appareil de travail selon l'une des revendications 1 à 3,
**caractérisé en ce que** le dispositif de réglage (12) peut être actionné par l'intermédiaire d'un organe de réglage (14) disposé sur le boîtier (8).

5. Appareil de travail selon l'une des revendications 1 à 4,
**caractérisé en ce que** le moteur électrique (6) est un moteur électrique à commutation électronique dont le champ tournant d'entraînement est modifiable par l'unité de commande (10).

6. Appareil de travail selon l'une des revendications 1 à 5,
**caractérisé en ce que** la tension fournie au moteur électrique est variable.

7. Appareil de travail selon la revendication 6,
**caractérisé en ce que** la tension est variable par modulation de largeur d'impulsion.

8. Appareil de travail selon l'une des revendications 1 à 7,
**caractérisé en ce que** l'appareil de travail (50) est un appareil de récolte (1).
